# EUROPEAN PATENT SPECIFICATION

(11) **EP 4 262 177 B1**
(45) Date of publication and mention of the grant of the patent: **14.10.2026**
(21) Application number: 21922566.1
(22) Date of filing: 13.12.2021
(51) Int. Cl.: H04M 1/02, H04M 1/03, G01J 1/02, G01J 1/04, G01J 1/42, F21V 8/00, H04W 52/02, H04M 1/22

(54) **TERMINAL**
ENDGERÄT
TERMINAL

(30) Priority: 29.01.2021 CN 202110126416
(43) Date of publication of application: 18.10.2023
(73) Proprietor: Huawei Technologies Co., Ltd., Shenzhen, Guangdong 518129 (CN)
(72) Inventor: ZHANG, Yihe, Shenzhen, Guangdong 518129 (CN); LI, Chenlong, Shenzhen, Guangdong 518129 (CN); GAO, Jiuliang, Shenzhen, Guangdong 518129 (CN); LU, Hongyu, Shenzhen, Guangdong 518129 (CN)
(74) Representative: Maiwald GmbH
(86) International application number: PCT/CN2021/137509
(87) International publication number: WO 2022/160976

(56) References cited:
- CN-A- 108 924 279
- CN-A- 112 153 183
- CN-A- 112 968 984
- US-A1- 2018 295 222

## Description

### TECHNICAL FIELD

This application relates to the field of electronic product technologies, and in particular, to a terminal.

### BACKGROUND

Currently, an ambient light sensor may be disposed in a terminal, to reduce impact of a display panel of the terminal on vision of a user, and reduce power consumption of the terminal. The ambient light sensor is configured to sense intensity of external ambient light. The terminal may automatically adjust brightness of the display panel of the terminal based on the intensity of the external ambient light that is sensed by the ambient light sensor. Therefore, impact of the display panel of the terminal on the vision of the user can be reduced, and power consumption of the terminal can be reduced. To enable external ambient light to reach the ambient light sensor, a light sensor window may be disposed above a front surface of the terminal, and the external ambient light may reach the ambient light sensor through the light sensor window. However, a screen-to-body ratio of the terminal is reduced to a specific extent due to existence of the light sensor window.

US 2018/295222 A1 describes electronic device including a housing having at least one through hole.

### SUMMARY

In view of the foregoing content, it is necessary to provide a terminal, where a screen-to-body ratio of the terminal can be increased, to implement a simpler ambient light detection solution.

An embodiment of this application provides a terminal. The terminal includes: a first sound outlet hole, where the first sound outlet hole is located at a top of a side frame of the terminal, and communicates the inside of the terminal with the outside; a light guide, where the light guide is disposed in the first sound outlet hole, the light guide includes a light incident surface and a light emergent surface, and the light guide is configured to directly emit external ambient light from the light incident surface to the light emergent surface; and an ambient light sensor, where the ambient light sensor is located on an inner side of the side frame, and is opposite to the light emergent surface.

According to some embodiments of this application, the light guide includes a light guide body and a plurality of light pipes. The light guide body includes a first end face and a second end face opposite to the first end face. Each light pipe extends from the first end face of the light guide body in a direction away from the light guide body. End faces that are of the light pipes and that are away from the first end face form the light incident surface. An end part in which the second end face of the light guide body is located includes a bottom surface, and the light emergent surface includes the bottom surface of the light guide body.

The light guide includes the light guide body and the plurality of light pipes, so that external ambient light can be directly emitted from the light incident surface to the light emergent surface by using a simple structure.

According to some embodiments of this application, the side frame forms an annular step in the first sound outlet hole. The annular step divides the first sound outlet hole into a first part and a second part, and an aperture of the first part is greater than an aperture of the second part. First parts of a plurality of first sound outlet holes communicate with each other to form a third part, and a hole wall of the third part is close to the inner side of the side frame relative to a hole wall of the second part. The light guide body is accommodated in the third part, and each light pipe is accommodated in one second part.

The part that is of the first sound outlet hole and that is close to the ambient light sensor and the part that is of the light guide and that is close to the ambient light sensor are widened, so that an incoming light scattering loss can be reduced.

According to some embodiments of this application, the annular step connects the hole wall of the first part to the hole wall of the second part by using an abutting surface. The first end face forms a step surface at a joint between the light guide body and the light pipe, and the step surface abuts against the abutting surface, and is fastened to the abutting surface by using an adhesive layer. The present invention is defined by the subject-matter of the independent claims. Additional features of the invention are presented in the dependent claims.

The step surface is fastened to the abutting surface by using the adhesive layer, to help implement sealing and fastening of the light guide.

According to some embodiments of this application, the light guide further includes a mounting part. The mounting part extends on a circumferential surface of the end part away from two opposite sides of the bottom surface of the light guide body. A mounting surface that is of the mounting part and that is opposite to the bottom surface includes a first mounting surface and a second mounting surface, and the second mounting surface is inclined relative to the first mounting surface to form an included angle greater than 180°. The side frame is recessed at the third part to form a first contact surface and a second contact surface. The second contact surface is inclined relative to the first contact surface to form an included angle less than 180°. The first mounting surface is in contact with the first contact surface, and the second mounting surface is in contact with the second contact surface.

The light guide may be mounted in the first sound outlet hole by using the first mounting surface and the second mounting surface of the mounting part.

According to some embodiments of this application, the light guide further includes a mounting part. The mounting part extends on the second end face from an edge of the bottom surface of the light guide body in a direction away from the light pipe. A mounting surface that is of the mounting part and that is opposite to the bottom surface forms an included angle less than 180° relative to the connected light guide body. The side frame forms an inclined surface on the third part, and the inclined surface is inclined relative to the hole wall of the third part to form an included angle greater than 180°. A circumferential surface of the light guide body is in contact with the hole wall, and the mounting surface is in contact with the inclined surface.

The light guide may be mounted in the first sound outlet hole through the mounting surface of the mounting part and the light guide body.

According to some embodiments of this application, a bottom surface of the mounting part and the bottom surface of the light guide body form a flat plane. The plane formed by the bottom surface of the mounting part and the bottom surface of the light guide body is the light emergent surface.

The light emergent surface is a flat plane, and can evenly emit external ambient light.

According to some embodiments of this application, the light guide includes a light pipe and a bottom. The light pipe includes a first end face and a second end face opposite to the first end face. The first end face is the light incident surface, the second end face is inclined relative to the first end face, and the bottom is in a shape of a round table. The bottom includes a first bottom surface and a second bottom surface, and a radius of the first bottom surface is less than a radius of the second bottom surface. The first bottom surface is fastened to the second end face of the light pipe, and the second bottom surface is the light emergent surface.

The light guide includes the light pipe and the bottom, so that external ambient light can be directly emitted from the light incident surface to the light emergent surface by using a simple structure.

According to some embodiments of this application, the terminal further includes: a second sound outlet hole, where the second sound outlet hole is located at the top of the side frame of the terminal, and communicates the inside of the terminal with the outside; a sound cavity, where the sound cavity is disposed inside the terminal, communicates with the second sound outlet hole, and is isolated from the first sound outlet hole; and a receiver, where a sound outlet of the receiver communicates with the sound cavity.

The sound cavity and the first sound outlet hole are isolated from each other, so that sealing property of the sound cavity and sealing inside the terminal can be implemented.

According to some embodiments of this application, the terminal further includes a middle plate. A peripheral side of the middle plate is fastened to an inner peripheral side of the side frame. A part that is of a hole wall of the first sound outlet hole and that is close to an inner wall of the side frame and a part that is of a hole wall of the second sound outlet hole and that is close to the inner wall of the side frame are located on two opposite sides of the middle plate.

According to some embodiments of this application, the terminal further includes: a second sound outlet hole, where the second sound outlet hole is located at the top of the side frame of the terminal, and communicates the inside of the terminal with the outside; a sound cavity, where the sound cavity is disposed inside the terminal, communicates with the second sound outlet hole, and communicates with the first sound outlet hole; a receiver, where a sound outlet of the receiver communicates with the sound cavity; and an ambient light sensor, where a light sensitive inlet of the ambient light sensor communicates with the sound cavity.

The sound cavity communicates with the first sound outlet hole and the ambient light sensor, so that external ambient light may enter the inside of the terminal in another manner.

According to this application, the ambient light sensor senses external ambient light by using the sound outlet hole, so that a gap between the middle frame and a display panel can be omitted, to reduce appearance black edges of a cover glass, increase a screen-to-body ratio and improve aesthetics of the terminal, and implement a simpler ambient light detection solution. At the same time, the external ambient light is directly detected by using the existing sound outlet hole, without imposing a requirement on light transmission of the display panel and additionally providing an opening. This reduces limitation on the light transmission of the display panel, can reduce costs, avoids impact by the display light, and causes low optical noise. The light guide is disposed in the sound outlet hole, to reduce a scattering loss of the external ambient light. The external ambient light is directly emitted from the light incident surface to the light emergent surface, so that a scattering loss of the external ambient light can be further reduced. The ambient light sensor is opposite to the light emergent surface, so that a loss of external ambient light incident from the light emergent surface to the ambient light sensor can be avoided.

### BRIEF DESCRIPTION OF DRAWINGS

FIG. 1 is a schematic diagram of gap ambient light according to this application;
FIG. 2 is a schematic diagram of under-display ambient light according to this application;
FIG. 3 is a block diagram of a structure of a terminal according to this application;
FIG. 4 is a schematic diagram of the structure of the terminal in FIG. 3;
FIG. 5 is a partial exploded view of the terminal in FIG. 3;
FIG. 6 is a schematic diagram of partial three-dimensional assembly of a terminal according to Embodiment 1 of this application;
FIG. 7 is an exploded schematic diagram of a top area of the terminal in FIG. 6;
FIG. 8 is an exploded schematic diagram of the terminal in FIG. 6 from a first perspective;
FIG. 9 is an exploded schematic diagram of the terminal in FIG. 6 from a second perspective;
FIG. 10 is a partial enlarged schematic diagram at X in FIG. 9;
FIG. 11 is a schematic diagram of a light guide of the terminal in FIG. 6 according to Embodiment 1;
FIG. 12 is a first schematic cross-sectional diagram of the terminal in FIG. 6 according to Embodiment 1;
FIG. 13 is a second schematic cross-sectional diagram of the terminal in FIG. 6 according to Embodiment 1;
FIG. 14 is a bottom view of the terminal in FIG. 6 without a circuit board;
FIG. 15 is a schematic diagram of a light guide of the terminal in FIG. 6 according to Embodiment 2;
FIG. 16 is a first schematic cross-sectional diagram of the terminal in FIG. 6 according to Embodiment 2;
FIG. 17 is a schematic cross-sectional diagram of a terminal according to Embodiment 2 of this application; and
FIG. 18 is a bottom view of a terminal without a circuit board according to Embodiment 3 of this application.

Description of reference numerals of main components:

| | |
|---|---|
| Terminals | 1, 2, 3, 4, 6, and 170 |
| Middle frames | 10, 20, 43, and 61 |
| Display panels | 11, 21, 35, and 42 |
| Cover glass | 12, 22, and 41 |
| Ambient light sensors | 13, 23, 36, 46, 67, and 1803 |
| Circuit boards | 14, 24, 44, and 60 |
| Rear covers | 15, 25, and 45 |
| Gap | 16 |
| Processor | 31 |
| Memory | 32 |
| Communication bus | 33 |
| Communication interface | 34 |
| Receivers | 37, 48, and 69 |
| Cameras | 38, 47, and 68 |
| Light transmission part | 410 |
| Side frames | 431, 610, and 1600 |
| Middle plates | 432, 630, and 1801 |
| Sound outlet holes | 433 and 612 |
| Light guides | 65, 150, and 1702 |
| Inner peripheral side | 611 |
| Peripheral side | 6300 |
| First sound outlet holes | 613, 1604, and 1701 |
| Second sound outlet hole | 614 |
| Hole walls | 615, 617, 621, 622, 626, and 1603 |
| Inner wall | 616 |
| Annular step | 618 |
| First part | 619 |
| Second part | 620 |
| Abutting surface | 623 |
| Adhesive layer | 624 |
| Third parts | 625 and 1601 |
| Camera through hole | 631 |
| Receiver through hole | 632 |
| Sound outlet | 691 |
| First sound guide slot | 633 |
| Support plate | 634 |
| Limiting surface | 635 |
| Second sound guide slot | 636 |
| Sound guide slot | 637 |
| Sound cavity cover | 638 |
| Sound cavity | 639 |
| Sealant | 640 |
| Light incident surfaces | 651 and 1703 |
| Light emergent surfaces | 652 and 1704 |
| Light guide bodies | 653 and 1500 |
| Light pipes | 654, 1501, and 1705 |
| Mounting parts | 655 and 1502 |
| First end faces | 656 and 1707 |
| Second end faces | 657, 1503, and 1708 |
| Bottom surfaces | 658, 664, 1504, and 1505 |
| Step surface | 659 |
| End face | 660 |
| Mounting surfaces | 661 and 1506 |
| First mounting surface | 662 |
| Second mounting surface | 663 |
| First contact surface | 627 |
| Second contact surface | 628 |
| Inclined surface | 1602 |
| Bottom | 1706 |
| First bottom surface | 1709 |
| Second bottom surface | 1710 |
| Light sensitive inlet | 1802 |

In the following specific embodiments, this application is further described with reference to the accompanying drawings.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of this embodiment of this application, a term "for example" is used to represent giving an example, an illustration, or a description. Any embodiment or design scheme described as "for example" in embodiments of this application should not be explained as being more preferred or having more advantages than another embodiment or design scheme. Exactly, use of the word "for example" or the like is intended to present a related concept in a specific manner.

Unless otherwise defined, all technical and scientific terms used in this specification have same meanings as those usually understood by a person skilled in the art of this application. Terms used in the specification of this application are merely for the purpose of describing specific embodiments, but are not intended to limit this application. It should be understood that in this application, unless otherwise specified, "a plurality of" means two or more.

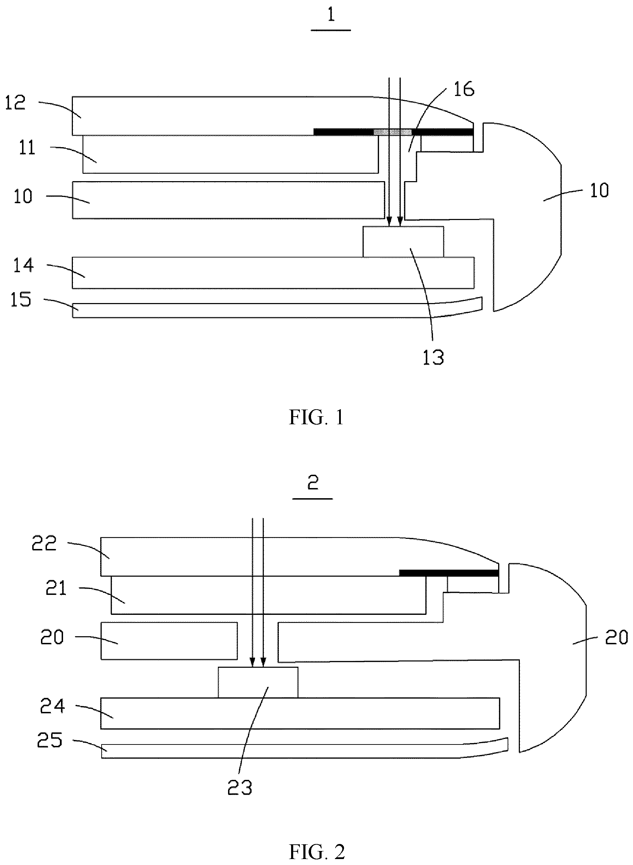

An ambient light detection method provided in an embodiment of this application is shown in FIG. 1. The ambient light detection method adopts a gap ambient light detection method. In FIG. 1, a terminal 1 includes a middle frame 10, a display panel 11, a cover glass 12, an ambient light sensor 13, a circuit board 14, and a rear cover 15. The display panel 11, the ambient light sensor 13, and the circuit board 14 are disposed in accommodating space formed by the middle frame 10, the cover glass 12, and the rear cover 15. The display panel 11 is mounted on the middle frame 10. The cover glass 12 covers the middle frame 10 and the display panel 11. Because the display panel 11 has no display function at an edge, a first shield layer is disposed inside a corresponding position of the cover glass 12. In this embodiment, the first shield layer is an ink layer having a first light transmittance. There is a gap 16 between the middle frame 10 and the display panel 11. A second shield layer is disposed on an inner side that is of the cover glass 12 and that corresponds to the gap 16. The second shield layer is an ink layer having a second light transmittance. The light transmittance of the second shield layer is greater than the light transmittance of the first shield layer. The ambient light sensor 13 is disposed corresponding to the gap 16. The ambient light sensor 13 is disposed on the circuit board 14. The cover glass 12 is disposed above the ambient light sensor 13. A light transmittance of a projection area of a field of view (FOV) of the ambient light sensor 13 on the cover glass 12 is greater than a light transmittance of a projection area of the display panel 11 on the cover glass 12. External ambient light may be transmitted from the outside to the ambient light sensor 13 through the gap 16 and the projection area of the field of view (FOV) of the ambient light sensor 13 on the cover glass 12. Therefore, the terminal 1 may automatically adjust brightness of the display panel 11 of the terminal 1 based on intensity of the external ambient light that is sensed by the ambient light sensor 13. However, this requires that light intensity of the external ambient light transmitted through the gap 16 and the projection area of the field of view (FOV) of the ambient light sensor 13 on the cover glass 12 reaches a specific intensity, so that the ambient light sensor 13 can sense the external ambient light. Therefore, a width of the gap 16 needs to reach a specific width. In this way, a screen-to-body ratio of the terminal 1 is reduced, and aesthetics of the terminal 1 is affected.

An ambient light detection method provided in another embodiment of this application is shown in FIG. 2. The ambient light detection method adopts an under-display ambient light detection method. In FIG. 2, a terminal 2 includes a middle frame 20, a display panel 21, a cover glass 22, an ambient light sensor 23, a circuit board 24, and a rear cover 25. The display panel 21, the ambient light sensor 23, and the circuit board 24 are disposed in accommodating space formed by the middle frame 20, the cover glass 22, and the rear cover 25. The display panel 21 is mounted on the middle frame 20. The cover glass 22 covers the middle frame 20 and the display panel 21. The ambient light sensor 23 is mounted below the cover glass 22 and the display panel 21. Because of light transmission of the cover glass 22 and the display panel 21, external ambient light may pass through the cover glass 22 and the display panel 21 to reach the ambient light sensor 23. Therefore, the terminal 2 may automatically adjust brightness of the display panel 21 of the terminal based on intensity of the external ambient light that is sensed by the ambient light sensor 23. In this way, the terminal 2 does not need to occupy a gap between the display panel 21 and the middle frame 20, so that space can be saved. However, in the ambient light detection method, the display panel 21 needs to have light transmission. For an opaque display panel 21 such as an LCD screen, the external ambient light cannot reach the ambient light sensor 23, and the terminal 2 cannot automatically adjust brightness of the display panel 21 of the terminal. In addition, problems of low light transmission of the display panel 21 and interference of light emitted by the display panel 21 may cause relatively large noise of the external ambient light sensed by the ambient light sensor 23, and thus may cause relatively low sensing precision.

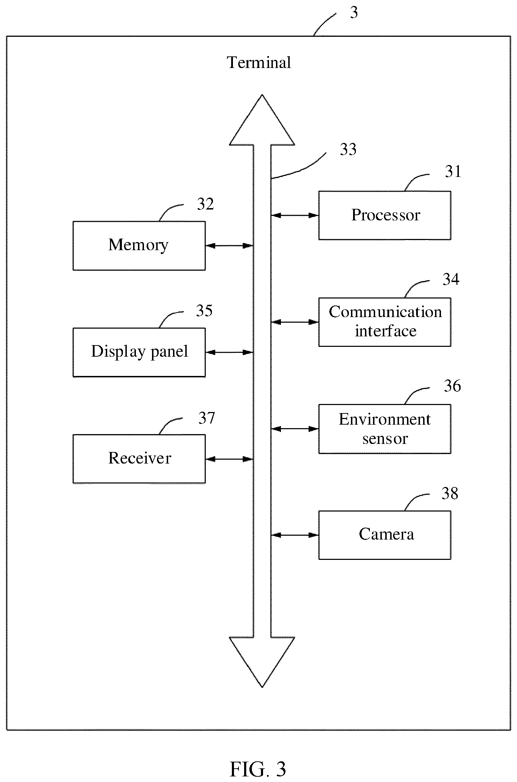

FIG. 3 is a block diagram of a structure a terminal according to this application. The terminal 3 may be a tablet computer, a mobile phone, an e-reader, a notebook computer, a vehicle-mounted device, a wearable device, or the like. The terminal 3 may include a processor 31, a memory 32, a communication bus 33, a communication interface 34, a display panel 35, an ambient light sensor 36, a receiver 37, and a camera 38. The processor 31 is in a communication connection to the memory 32, the communication interface 34, the display panel 35, the ambient light sensor 36, the receiver 37, and the camera 38 by using the communication bus 33. A person skilled in the art may understand that the structure shown in FIG. 3 does not constitute a limitation on the terminal 3, and the terminal 3 may include more or fewer components than those shown in the figure, or combine some components, or split some components, or have different component arrangements.

The processor 31 may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA), or another programmable logic device, a discrete gate or a transistor logic device, a discrete hardware component, or the like. The processor 31 may be a microprocessor, or the processor 31 may be any conventional processor, or the like. The processor 31 is a control center of the terminal 3, and is connected to all parts of the entire terminal 3 by using various interfaces and lines.

The memory 32 may be configured to store a software program and/or a module/unit. The processor 31 implements various functions of the terminal 3 by running or executing the software program and/or the module/unit stored in the memory 32 and invoking data stored in the memory 32. The memory 32 may mainly include a program storage area and a data storage area, where the program storage area may store an operating system, an application program required by at least one function (for example, a voice playing function and an image playing function), and the like, and the data storage area may store data (for example, audio data) created according to use of the terminal 3, and the like. In addition, the memory 32 may include a nonvolatile computer-readable memory, for example, a hard disk, a memory, a plug-in hard disk, a smart media card (Smart Media Card, SMC), a secure digital (Secure Digital, SD) card, a flash card (Flash Card), at least one magnetic disk storage device, a flash memory, or another nonvolatile solid-state storage device.

The communication interface 34 may be configured to communicate with another device or a communication network, for example, an Ethernet, a radio access network (radio access network, RAN), or a wireless local area network (wireless local area network, WLAN).

The display panel 35 may be configured to display an image, prompt information, and the like. The display panel 35 may be a liquid crystal display (liquid crystal display, LCD), an organic light-emitting diode (organic light-emitting diode, OLED) display, an active-matrix organic light emitting diode (active-matrix organic light emitting diode, AMOLED) display, a flexible light-emitting diode (flexible light-emitting diode, FLED) display, a quantum dot light-emitting diode (quantum dot light emitting diode, QLED) display, or the like.

The ambient light sensor 36 is configured to sense external ambient light, so that the processor 31 automatically adjusts brightness of the display panel 35 of the terminal 3 based on the sensed external ambient light.

The receiver 37 is configured to convert an audio electrical signal into a sound signal to implement audio (voice and music) playback.

The camera 38 is configured to capture an image. The camera 38 includes a front-facing camera. In this embodiment, the camera 38 may further include a rear-facing camera.

In this embodiment, an example in which the terminal 3 is a mobile phone is used for description. It may be understood that, in this embodiment of this application, the terminal 3 may alternatively be a tablet computer, an e-reader, a notebook computer, a vehicle-mounted device, or a wearable device.

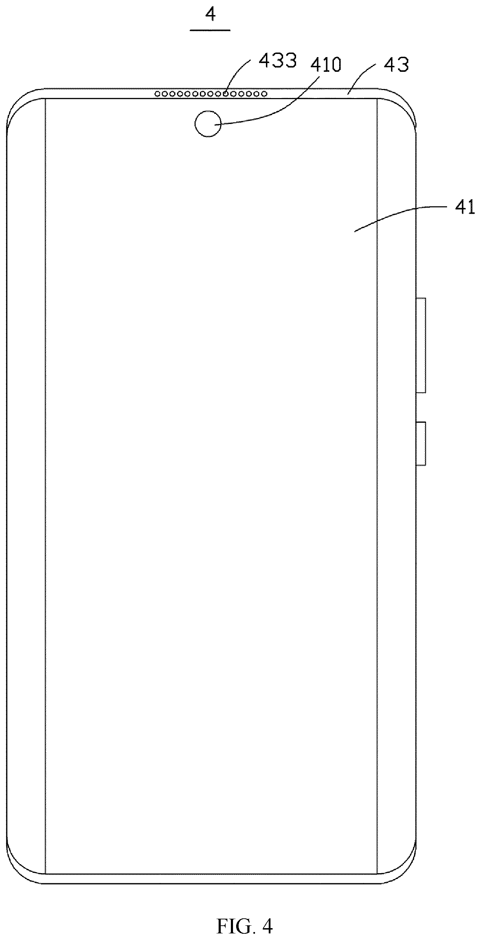

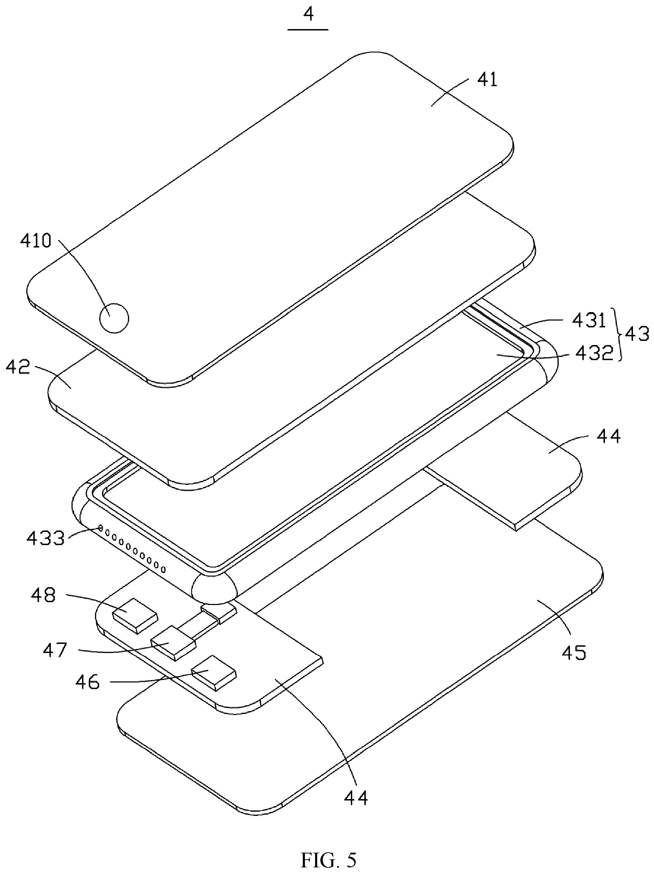

FIG. 4 is a schematic diagram of a structure of a terminal. FIG. 5 is a partial exploded view of a terminal. Appearance shapes in FIG. 4 and FIG. 5 are merely examples of the mobile phone, do not represent an appearance shape and a size of the mobile phone, and do not represent that an internal structure of the mobile phone is unique. The terminal 4 includes a cover glass 41, a display panel 42, a middle frame 43, a circuit board 44, a rear cover 45, an ambient light sensor 46, a camera 47, and a receiver 48. The display panel 42, the circuit board 44, the ambient light sensor 46, the camera 47, and the receiver 48 are disposed in accommodating space formed by the cover glass 41, the middle frame 43, and the rear cover 45. The cover glass 41, the display panel 42, the circuit board 44, and the rear cover 45 are sequentially disposed from top to bottom. The cover glass 41 covers the display panel 42. A light transmission part 410 is disposed on the cover glass 41. The middle frame 43 includes a side frame 431 and a middle plate 432. The side frame 431 is disposed around the display panel 42 and the periphery of the circuit board 44. A plurality of sound outlet holes 433 are provided at the top of the side frame 431. FIG. 4 shows that the sound outlet hole 433 is in an oblique upward direction of the top of the side frame 431. However, apparently, this application is not limited to the position shown in FIG. 4, and the sound outlet hole 433 may alternatively be directly above the top of the side frame 431 or the like. A peripheral side of the middle plate 432 is fastened to an inner peripheral side of the side frame 431. The middle plate 432 may be integrally formed with the side frame 431. The middle plate 432 divides an inner cavity of the terminal into upper and lower parts. The display panel 42 is accommodated in the upper part. The ambient light sensor 46, the camera 47, the receiver 48, and the circuit board 44 are accommodated in the lower part. In other words, the middle plate 432 is located on an inner side of the side frame 431, and is located between the display panel 42 and the circuit board 44. The ambient light sensor 46 senses external ambient light through at least one sound outlet hole 433. The camera 47 collects light by using the light transmission part 410. The receiver 48 guides sound to the terminal 4 through the other sound outlet holes 433.

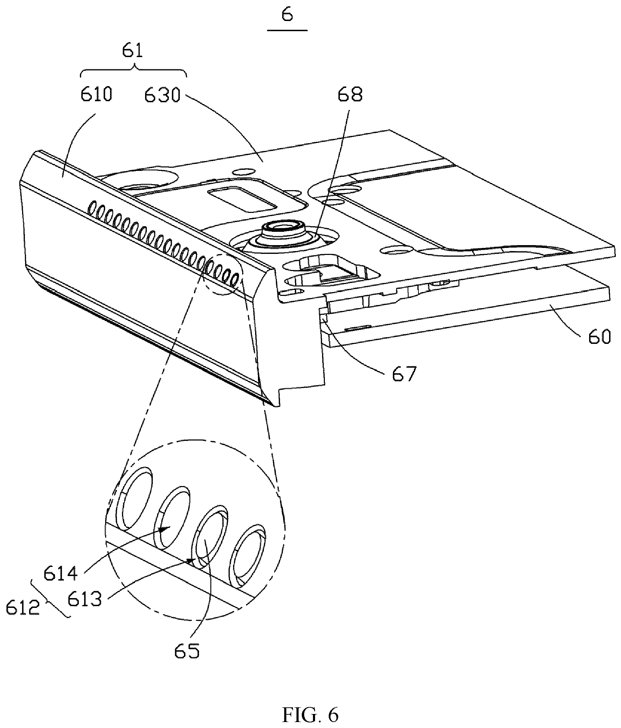

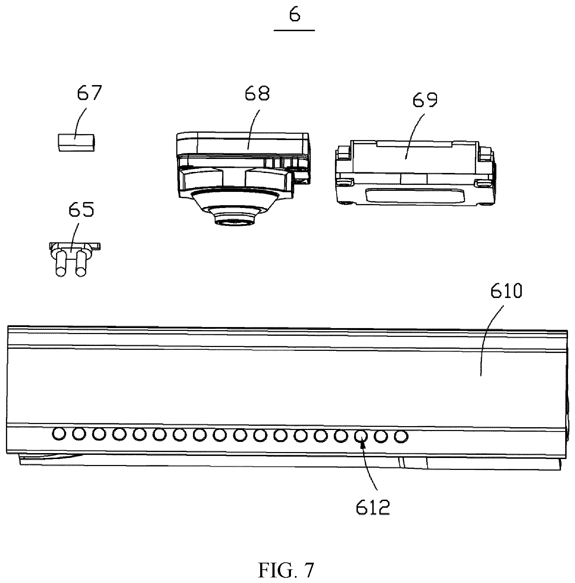

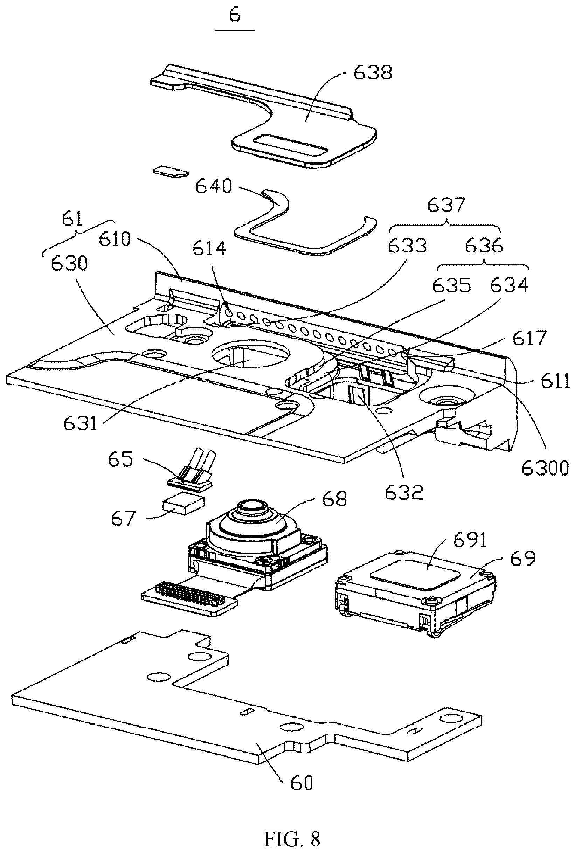

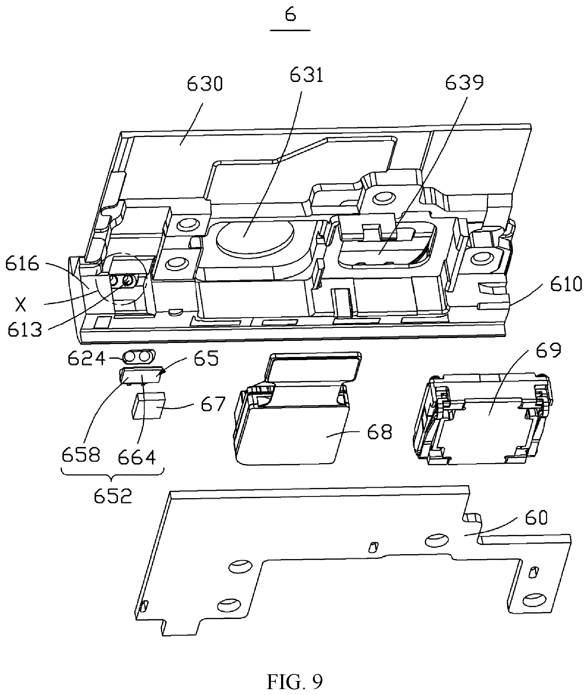

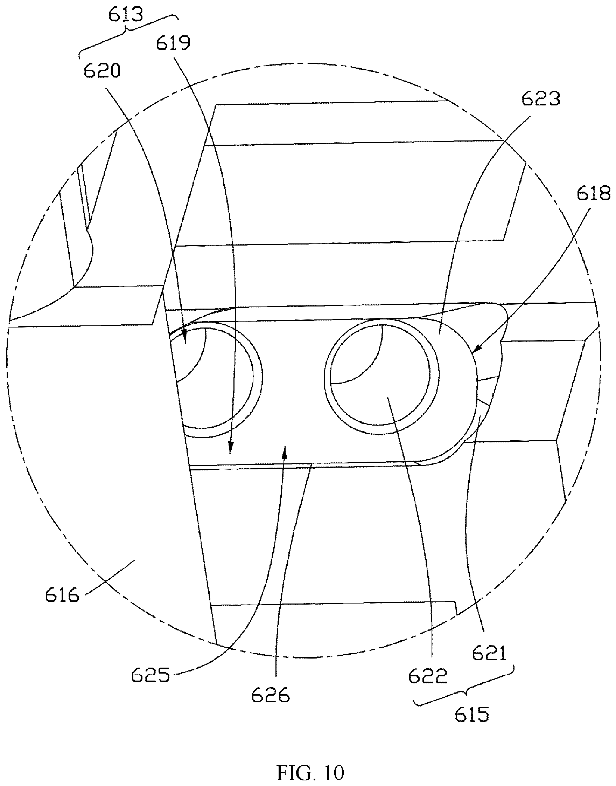

FIG. 6 is a schematic diagram of partial three-dimensional assembly of a terminal according to Embodiment 1 of this application. FIG. 7 is an exploded schematic diagram of a top area of a terminal. FIG. 8 is an exploded schematic diagram of a terminal from a first angle of view. FIG. 9 is an exploded schematic diagram of a terminal from a second angle of view. In FIG. 6 and FIG. 7, the terminal 6 includes a circuit board 60, a middle frame 61, a light guide 65, an ambient light sensor 67, a camera 68, and a receiver 69. The middle frame 61 includes a side frame 610 and a middle plate 630. An inner peripheral side 611 of the side frame 610 is fastened to a peripheral side 6300 of the middle plate 630. The side frame 610 may be integrally formed with the middle plate 630. The side frame 610 is disposed around the circuit board 60. A row of sound outlet holes 612 are provided at the top of the side frame 610. The sound outlet hole 612 penetrates through the side frame 610. The sound outlet hole 612 is slender and has a small aperture. The aperture of the sound outlet hole 612 may be within 1 millimeter. A hole wall of the sound outlet hole 612 is inclined towards the circuit board 60. The sound outlet hole 612 includes a first sound outlet hole 613 and a second sound outlet hole 614. The first sound outlet hole 613 is located at the top of the side frame 610 of the terminal, and communicates the inside of the terminal 6 with the outside. A part that is of a hole wall 615 (as shown in FIG. 10) of the first sound outlet hole 613 and that is close to an inner wall 616 of the side frame 610 and a part that is of a hole wall 617 of the second sound outlet hole 614 and that is close to the inner wall 616 of the side frame 610 are located on two opposite sides of the middle plate 630. Specifically, the part that is of the hole wall 615 of the first sound outlet hole 613 and that is close to the circuit board 60 is located at a first side (as shown in FIG. 9) of the middle plate 630. The part that is of the hole wall 617 of the second sound outlet hole 614 and that is close to the circuit board 60 is located at a second side (as shown in FIG. 8) of the middle plate 630. The first side and the second side are opposite sides. In this embodiment, the first side is located below, and the second side is located above. The first sound outlet hole 613 is configured to allow external ambient light to enter the inside of the terminal 6, and the second sound outlet hole 614 is configured to transmit sound inside the terminal 6 to the outside, so that a user can hear the sound. To increase the external ambient light entering the inside of the terminal 6, a plurality of first sound outlet holes 613 may be provided. In this embodiment, there are two first sound outlet holes 613. Apparently, a quantity of first sound outlet holes 613 is not limited to two, or may further be another quantity, for example, three. FIG. 10 is a partial enlarged schematic diagram at X in FIG. 9. The side frame 610 forms an annular step 618 in the first sound outlet hole 613. The annular step 618 divides the first sound outlet hole 613 into a first part 619 and a second part 620. A hole wall 621 of the first part 619 is closer to the circuit board 60 than a hole wall 622 of the second part 620. An aperture of the first part 619 is greater than that of the second part 620. The annular step 618 also connects the hole wall 621 of the first part 619 to the hole wall 622 of the second part 620 by an abutting surface 623. In this embodiment, an adhesive layer 624 (as shown in FIG. 9) is disposed on the abutting surface 623. First parts 619 of a plurality of first sound outlet holes 613 are connected to each other to form a third part 625. In this embodiment, first parts 619 of two first sound outlet holes 613 are connected to each other to form a third part 625. A hole wall 626 of the third part 625 is closer to the inner wall 616 of the side frame 610 than the hole wall 622 of the second part 620.

Still to FIG. 6 to FIG. 9. The middle plate 630 is located above the circuit board 60. A camera through hole 631 and a receiver through hole 632 are formed on the middle plate 630. The camera through hole 631 is configured to shelter the camera 68. The receiver through hole 632 is configured to shelter the receiver 69. The sound outlet 691 of the receiver 69 faces the display panel. A first sound guide slot 633 is formed at a joint between the middle plate 630 and the side frame 610. The first sound guide slot 633 communicates with the second sound outlet hole 614. In this embodiment, at the second sound outlet hole 614, the first sound guide slot 633 is formed at the joint between the middle plate 630 and the side frame 610. The first sound guide slot 633 communicates with the second sound outlet hole 614. The middle plate 630 is recessed at the receiver through hole 632 to form a support plate 634 and a limiting surface 635. The support plate 634 and the limiting surface 635 form a second sound guide slot 636. The second sound guide slot 636 communicates with the receiver through hole 632, and communicates with the first sound guide slot 633. The second sound guide slot 636 and the first sound guide slot 633 form a sound guide slot 637. The terminal 6 further includes a sound cavity cover 638. A shape of the sound cavity cover 638 matches a shape of the sound guide slot 637. The sound cavity cover 638 covers the sound guide slot 637 to form a sealed sound cavity 639. The sound cavity 639 is disposed inside the terminal. In this embodiment, the terminal 6 further includes sealant 640, and the sealant 640 is disposed on an edge of a surface that is of the sound cavity cover 638 and that faces the middle plate 630, so that the sound cavity cover 638 is in a sealed connection to the middle plate 630. Therefore, sealing of the sound cavity 639 can be improved. The sound cavity 639 communicates with the second sound outlet hole 614, communicates with the receiver through hole 632, and is isolated from the first sound outlet hole 613. The sound outlet 691 of the receiver 69 communicates with the sound cavity 639, so that the sound cavity 639 may be configured to transmit, to the outside by using the second sound outlet hole 614, sound emitted by the sound outlet 691 of the receiver 69.

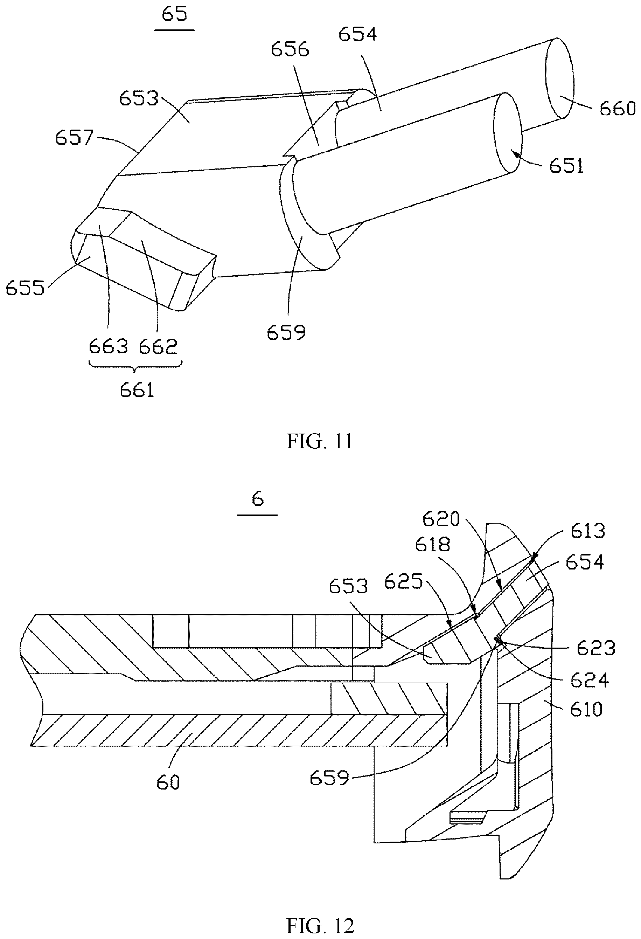

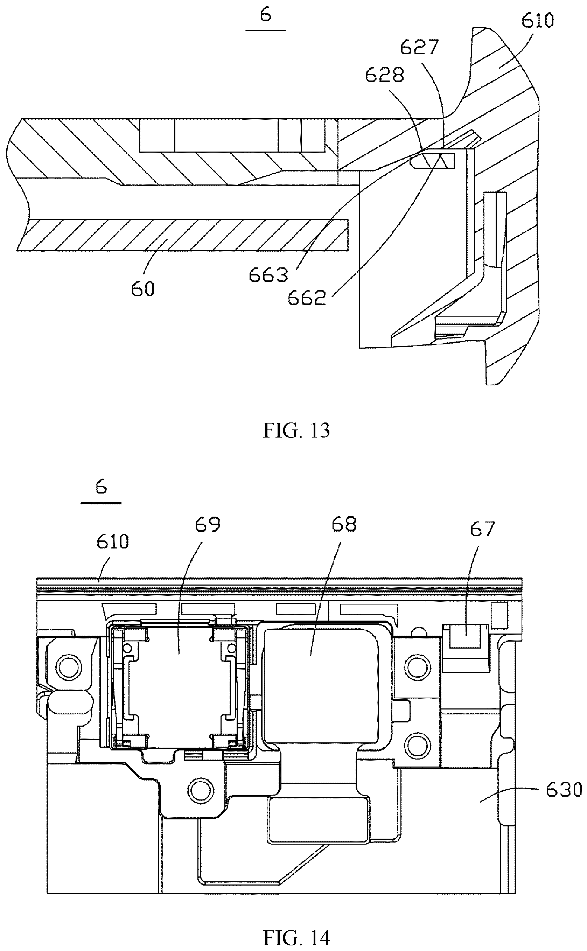

FIG. 11 is a schematic diagram of a light guide according to Embodiment 1 of a terminal. FIG. 12 is a first cross-sectional schematic diagram of Embodiment 1 of a terminal. FIG. 13 is a second cross-sectional schematic diagram of Embodiment 1 of a terminal. In this embodiment, because the first sound outlet hole 613 is relatively slender, external ambient light has a loss when being transmitted to the inside of the terminal 6 through the first sound outlet hole 613. Therefore, to avoid loss, a light guide 65 may be disposed in the first sound outlet hole 613. The light guide 65 enables the external ambient light to be evenly transmitted inside the light guide 65, thereby reducing a scattering loss of the external ambient light inside the first sound outlet hole 613, and increasing detection sensitivity of the external ambient light. The light guide 65 is mounted in two first sound outlet holes 613. The light guide 65 includes a light incident surface 651 and a light emergent surface 652 (as shown in FIG. 9). The light guide 65 is configured to directly emit the external ambient light from the light incident surface 651 to the light emergent surface 652. The light guide 65 includes a light guide body 653, a plurality of light pipes 654, and a mounting part 655. A cross section of the light guide body 653 is generally oval. The light guide body 653 includes a first end face 656 and a second end face 657 opposite to the first end face 656. An end part in which the second end face 657 of the light guide body 653 is located includes a bottom surface 658 (as shown in FIG. 9). In this embodiment, the bottom surface 658 is planar. The light guide body 653 is accommodated in the third part 625. In this embodiment, a quantity of light pipes 654 matches a quantity of first sound outlet holes 613, and is two. Each light pipe 654 extends from the first end face 656 of the light guide body 653 in a direction away from the light guide body 653. The first end face 656 forms a step surface 659 at a joint between the light guide body 653 and the light pipe 654. In this embodiment, an aperture of the first sound outlet hole 613 is relatively small, so that a length-to-diameter ratio of the first sound outlet hole 613 is relatively large. This imposes a relatively high requirement on strength, and manufacturing and mounting of the light guide 65. In this embodiment, by using the annular step 618 and the step surface 659, a diameter of the light guide body 653 is greater than a diameter of the light pipe 654, a size in a diameter direction of the light guide 65 is increased, and strength of the light guide 65 is improved. This facilitates manufacturing and mounting, and reduces scattering of the ambient light in the light guide 65. The step surface 659 abuts against the abutting surface 623, and is fastened to the abutting surface 623 by using the adhesive layer 624 (as shown in FIG. 12). In this embodiment, the adhesive layer 624 may be formed by using a double-sided adhesive, and is formed by dispensing glue, or solidified by liquid glue. Therefore, a sealing function of the terminal can be implemented by using the adhesive layer 624, and the light guide 65 can be fastened in the first sound outlet hole 613. Each light pipe 654 is accommodated in a second part 620. End faces 660 that are of the light pipes 654 and that are away from the first end face 656 form the light incident surface 651. The mounting part 655 is located in the terminal. The mounting part 655 extends on a circumferential surface of the end part away from two opposite sides of the bottom surface 658 (as shown in FIG. 9) of the light guide body 653. Because the mounting part 655 is widened at the light guide body 653, the light guide 65 is easy to mount. Amounting surface 661 that is of the mounting part 655 and that is opposite to the bottom surface 658 (as shown in FIG. 9) includes a first mounting surface 662 and a second mounting surface 663. The second mounting surface 663 is inclined relative to the first mounting surface 662, to form an included angle greater than 180°. The side frame 610 configured to limit the mounting part 655 is recessed at the third part 625 to form a first contact surface 627 and a second contact surface 628. The second contact surface 628 is inclined relative to the first contact surface 627, to form an included angle less than 180°. The first mounting surface 662 is in contact with the first contact surface 627, and the second mounting surface 663 is in contact with the second contact surface 628 (as shown in FIG. 13). Therefore, the light guide 65 may be mounted in the first sound outlet hole 613 by using the mounting part 655. The bottom surface 664 (as shown in FIG. 9) of the mounting part 655 and the bottom surface 658 (as shown in FIG. 9) of the light guide body 653 form a flat plane. The plane formed by the bottom surface 664 of the mounting part 655 and the bottom surface 658 of the light guide body 653 is the light emergent surface 652. The light emergent surface 652 is a flat plane, and can evenly emit external ambient light. In this embodiment, the external ambient light is in the light guide 65, does not need to be reflected, and is directly emitted from the light incident surface 651 to the light emergent surface 652 (as shown in FIG. 9). Apparently, in this embodiment, the mounting part 655 may alternatively be omitted, so that the bottom surface of the light guide body 653 is the light emergent surface 652 (as shown in FIG. 9). Apparently, the light emergent surface 652 is not limited to a flat plane, but may alternatively be in another shape, for example, a shape that meets a requirement of the ambient light sensor for detecting an amount of incoming light of the external ambient light, such as a lens shape. Correspondingly, a shape of the bottom surface 664 of the mounting part 655 and a shape of the bottom surface 658 of the light guide body 653 may not be limited to the above-described shapes, but may alternatively be another shape based on the shape of the light emergent surface 652.

Still refer to FIG. 9. The ambient light sensor 67 is located on an inner side of the side frame 610, and below the middle plate 630. The ambient light sensor 67 is opposite to the light emergent surface 652. The ambient light sensor 67 may be disposed on the circuit board 60, or connected to the circuit board 60 by using a flexible circuit board. In this embodiment, the ambient light sensor 67, the receiver 69, and the camera 68 are in horizontal parallel positions (as shown in FIG. 14), and are disposed on the circuit board 60. The ambient light sensor 67 senses external ambient light by using the first sound outlet hole 613 and the light guide 65. In this embodiment, since light is reflected on a surface of an object, the ambient light sensor 67 is allowed to have an eccentric distance from main axes of the two first sound outlet holes 613, that is, does not need to face the first sound outlet hole 613. A function of the ambient light sensor 67 can be implemented as long as an intensity of light reflected to the ambient light sensor 67 is beyond a sensing range of the ambient light sensor 67. The terminal 6 is configured to adjust brightness of the display panel based on the external ambient light sensed by the ambient light sensor 67.

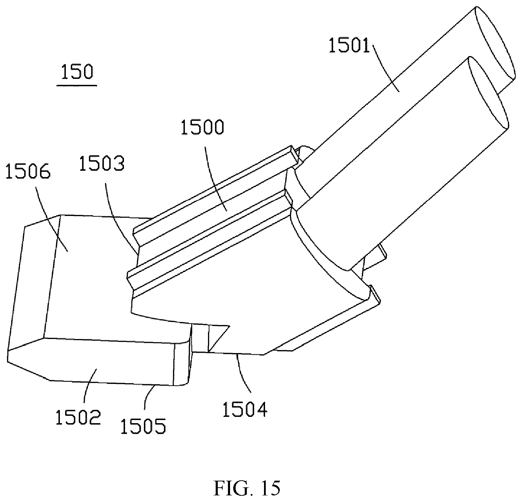

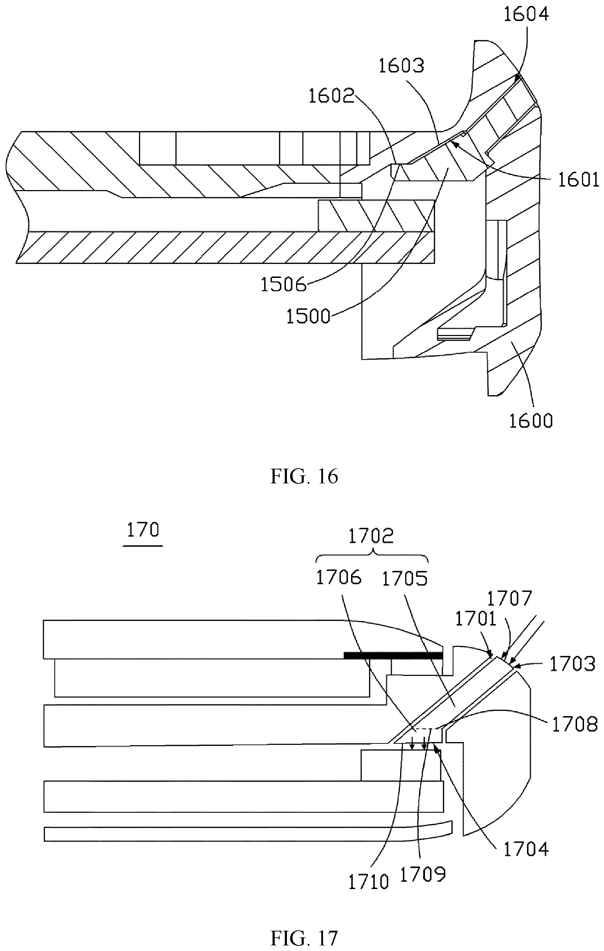

FIG. 15 is a schematic diagram of a light guide according to Embodiment 2 of a terminal. FIG. 16 is a first cross-sectional schematic diagram of Embodiment 2 of a terminal. A structure of the light guide in Embodiment 2 is similar to that of the light guide in Embodiment 1. The light guide 150 includes a light guide body 1500, a plurality of light pipes 1501, and a mounting part 1502. A third part of a side frame in Embodiment 2 is similar to the third part of the side frame in Embodiment 1, and a third part 1601 is also formed on the side frame. A difference lies in a structure of the mounting part 1502 and a structure of a position that limits the mounting part 1502 on the side frame 1600. Details are provided below.

The mounting part 1502 extends on the second end face 1503 from an edge of the bottom surface 1504 of the light guide body 1500 in a direction away from the light pipe 1501. The mounting surface 1506 that is of the mounting part 1502 and that is opposite to the bottom surface 1505 of the mounting part 1502 forms an included angle less than 180° relative to the connected light guide body 1500. The side frame 1600 configured to limit the mounting part 1502 forms an inclined surface 1602 at the third part 1601. The inclined surface 1602 is inclined relative to a hole wall 1603 of the third part 1601, to form an included angle greater than 180°. A circumferential surface of the light guide body 1500 is in contact with the hole wall 1603, and the mounting surface 1506 is in contact with the inclined surface 1602 (as shown in FIG. 16). Therefore, the light guide 150 may be mounted in the first sound outlet hole 1604 by using the mounting part 1502.

FIG. 17 is a schematic cross-sectional diagram of a terminal according to Embodiment 2 of this application. A structure of the terminal in Embodiment 2 is similar to that of the terminal in Embodiment 1, and the terminal 170 includes a first sound outlet hole 1701 and a light guide 1702. A difference lies in that:
There is one first sound outlet hole 1701. The light guide 1702 is disposed in the first sound outlet hole 1701. The light guide 1702 includes a light incident surface 1703 and a light emergent surface 1704. The light guide 1702 includes a light pipe 1705 and a bottom 1706. The light pipe 1705 is fastened to the bottom 1706. The light pipe 1705 includes a first end face 1707 and a second end face 1708 opposite to the first end face 1707. In this embodiment, to show the second end face 1708, a dashed line is added in the figure to indicate the second end face 1708. However, the dashed line does not limit an obvious boundary at a joint between the light pipe 1705 and the bottom 1706. The first end face 1707 is the light incident surface 1703. The second end face 1708 is inclined relative to the first end face 1707. The bottom 1706 is in a shape of a round table. The bottom 1706 includes a first bottom surface 1709 and a second bottom surface 1710. A radius of the first bottom surface 1709 is less than a radius of the second bottom surface 1710. The first bottom surface 1709 is fastened to the second end face 1708 of the light pipe 1705. The second bottom surface 1710 is the light emergent surface 1704.

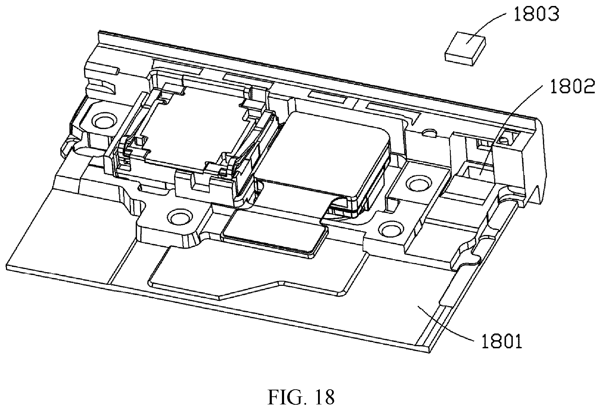

This application is not limited to the foregoing solution, and the terminal may further have another deformation. For example, the first sound outlet hole is located above the middle plate. The sound cavity communicates with the first sound outlet hole. A light sensitive inlet of the ambient light sensor communicates with the sound cavity. Specifically, as shown in FIG. 18, a light sensitive inlet 1802 is further formed on the middle plate 1801. The light sensitive inlet 1802 is the ambient light sensor through hole. The light sensitive inlet 1802 is configured to shelter the ambient light sensor 1803, and the ambient light sensor 1803 and the light sensitive inlet 1802 are sealed. Alternatively, for example, an aperture of the first sound outlet hole of the terminal is separately increased, or a plurality of first sound outlet holes communicate with each other.

According to this application, the ambient light sensor senses external ambient light by using the sound outlet hole, so that a gap between the middle frame and a display panel can be omitted, to reduce appearance black edges of a cover glass, increase a screen-to-body ratio and improve aesthetics of the terminal, and implement a simpler ambient light detection solution. At the same time, the external ambient light is directly detected by using the existing sound outlet hole, without imposing a requirement on light transmission of the display panel and additionally providing an opening. This can reduce costs, avoids impact by the display panel, and causes low optical noise. The light guide is disposed in the sound outlet hole, to reduce a scattering loss of the external ambient light. A part that is of the first sound outlet hole and that is close to the ambient light sensor and a part that is of the light guide and that is close to the ambient light sensor are widened, so that an incoming light scattering loss can be reduced, and sealing and fastening of the light guide are facilitated. The external ambient light is directly emitted from the light incident surface to the light emergent surface, so that a scattering loss of the external ambient light can be further reduced. The ambient light sensor is opposite to the light emergent surface, so that a loss of external ambient light incident from the light emergent surface to the ambient light sensor can be avoided.

Finally, it should be noted that the foregoing embodiments are merely intended for describing the technical solutions of this application, but not for limiting the technical solutions of this application. Although this application is described in detail with reference to the example embodiments, a person of ordinary skill in the art should understand that modifications may be made to the technical solutions of this application, without departing from the scope of the appended claims.

## Claims

1. A terminal, wherein the terminal comprises:
a plurality of first sound outlet holes (613), wherein the plurality of first sound outlet holes (613) is located at a top of a side frame (610) of the terminal, and communicates the inside of the terminal with the outside;
a light guide (65), wherein the light guide (65) is disposed in the plurality of first sound outlet holes (613), the light guide (65) comprises a light incident surface (651) and a light emergent surface (652), and the light guide (65) is configured to directly emit external ambient light from the light incident surface (651) to the light emergent surface (652); and
an ambient light sensor (67), wherein the ambient light sensor (67) is located on an inner side of the side frame (610), and is opposite to the light emergent surface (652);
wherein the light guide (65) comprises a light guide body (653) and a plurality of light pipes, the light guide body (653) comprises a first end face and a second end face opposite to the first end face, each light pipe extends from the first end face of the light guide body (653) in a direction away from the light guide body (653), end faces that are of the light pipes and that are away from the first end face form the light incident surface (651), an end part in which the second end face of the light guide body (653) is located comprises a bottom surface, and the light emergent surface (652) comprises the bottom surface of the light guide body (653);
wherein the side frame (610) forms an annular step in the plurality of first sound outlet holes (613), the annular step divides the plurality of first sound outlet holes (613) into a first part and a second part, an aperture of the first part is greater than an aperture of the second part, first parts of the plurality of first sound outlet holes (613) communicate with each other to form a third part, and a hole wall of the third part is close to the inner side of the side frame (610) relative to a hole wall of the second part; and the light guide body (653) is accommodated in the third part, and each light pipe is accommodated in one second part;
**characterized in that** the light guide (65) further comprises a mounting part, the mounting part extends on a circumferential surface of the end part away from two opposite sides of the bottom surface of the light guide body (653), a mounting surface that is of the mounting part and that is opposite to the bottom surface comprises a first mounting surface and a second mounting surface, and the second mounting surface is inclined relative to the first mounting surface to form an included angle greater than 180°;
the side frame (610) is recessed at the third part to form a first contact surface and a second contact surface, wherein the second contact surface is inclined relative to the first contact surface to form an included angle less than 180°; and
the first mounting surface is in contact with the first contact surface, and the second mounting surface is in contact with the second contact surface or
wherein the light guide (65) further comprises a mounting part, wherein the mounting part extends on the second end face from an edge of the bottom surface of the light guide body (653) in a direction away from the light pipe, a mounting surface that is of the mounting part and that is opposite to the bottom surface forms an included angle less than 180° relative to the connected light guide body (653), the side frame (610) forms an inclined surface on the third part, the inclined surface is inclined relative to the hole wall of the third part to form an included angle greater than 180°, a circumferential surface of the light guide body (653) is in contact with the hole wall, and the mounting surface is in contact with the inclined surface.

2. The terminal according to claim 1, wherein the annular step connects the hole wall of the first part to the hole wall of the second part by using an abutting surface, the first end face forms a step surface at a joint between the light guide body (653) and the light pipe, and the step surface abuts against the abutting surface, and is fastened to the abutting surface by using an adhesive layer.

3. The terminal according to claim 1, wherein
a bottom surface of the mounting part and the bottom surface of the light guide body (653) form a flat plane, and the plane formed by the bottom surface of the mounting part and the bottom surface of the light guide body (653) is the light emergent surface (652).

4. The terminal according to claim 1, wherein the light guide (65) comprises a light pipe and a bottom, the light pipe comprises a first end face and a second end face opposite to the first end face, the first end face is the light incident surface (651), the second end face is inclined relative to the first end face, the bottom is in a shape of a round table, the bottom comprises a first bottom surface and a second bottom surface, a radius of the first bottom surface is less than a radius of the second bottom surface, the first bottom surface is fastened to the second end face of the light pipe, and the second bottom surface is the light emergent surface (652).

5. The terminal according to claim 1, wherein the terminal further comprises:
a second sound outlet hole (614), wherein the second sound outlet hole (614) is located at the top of the side frame (610) of the terminal, and communicates the inside of the terminal with the outside;
a sound cavity (639), wherein the sound cavity (639) is disposed inside the terminal, communicates with the second sound outlet hole (614), and is isolated from the first sound outlet hole (613); and
a receiver (69), wherein a sound outlet (691) of the receiver (69) communicates with the sound cavity (639).

6. The terminal according to claim 5, wherein
the terminal further comprises a middle plate, a peripheral side of the middle plate is fastened to an inner peripheral side of the side frame, and a part that is of a hole wall of the first sound outlet hole (613) and that is close to an inner wall of the side frame (610) and a part that is of a hole wall of the second sound outlet hole (614) and that is close to the inner wall of the side frame (610) are located on two opposite sides of the middle plate.

7. The terminal according to claim 1, wherein the terminal further comprises:
a second sound outlet hole (614), wherein the second sound outlet hole (614) is located at the top of the side frame (610) of the terminal, and communicates the inside of the terminal with the outside;
a sound cavity (639), wherein the sound cavity (639) is disposed inside the terminal, communicates with the second sound outlet hole (614), and communicates with the first sound outlet hole (613);
a receiver (69), wherein a sound outlet (691) of the receiver (69) communicates with the sound cavity (639); and
wherein a light sensitive inlet of the ambient light sensor (67) communicates with the sound cavity (639).

## Patentansprüche

1. Endgerät, wobei das Endgerät Folgendes umfasst:
eine Vielzahl von ersten Schallaustrittslöchern (613), wobei sich die Vielzahl von ersten Schallaustrittslöchern (613) an einer Oberseite eines Seitenrahmens (610) des Endgeräts befindet und das Innere des Endgeräts mit der Außenseite verbindet;
einen Lichtleiter (65), wobei der Lichtleiter (65) in der Vielzahl von ersten Schallaustrittslöchern (613) angeordnet ist, der Lichtleiter (65) eine Lichteinfallsfläche (651) und eine Lichtaustrittsfläche (652) umfasst, und der Lichtleiter (65) dazu konfiguriert ist, externes Umgebungslicht von der Lichteinfallsfläche (651) direkt an die Lichtaustrittsfläche (652) zu emittieren; und
einen Umgebungslichtsensor (67), wobei sich der Umgebungslichtsensor (67) auf einer Innenseite des Seitenrahmens (610) befindet und der Lichtaustrittsfläche (652) gegenüberliegt;
wobei der Lichtleiter (65) einen Lichtleiterkörper (653) und eine Vielzahl von Lichtleitungen umfasst, der Lichtleiterkörper (653) eine erste Endfläche und eine zweite Endfläche gegenüber der ersten Endfläche umfasst, sich jede Lichtleitung von der ersten Endfläche des Lichtleiterkörpers (653) in einer Richtung weg von dem Lichtleiterkörper (653) erstreckt, Endflächen, die von den Lichtleitungen stammen und die von der ersten Endfläche entfernt sind, die Lichteinfallsfläche (651) ausbilden, ein Endteil, in welchem sich die zweite Endfläche des Lichtleitkörpers (653) befindet, eine Bodenfläche umfasst, und die Lichtaustrittsfläche (652) die Bodenfläche des Lichtleitkörpers (653) umfasst;
wobei der Seitenrahmen (610) eine ringförmige Stufe in der Vielzahl von ersten Schallaustrittslöchern (613) ausbildet, die ringförmige Stufe die Vielzahl von ersten Schallaustrittslöchern (613) in einen ersten Teil und einen zweiten Teil unterteilt, eine Öffnung des ersten Teils größer als eine Öffnung des zweiten Teils ist,
erste Teile der Vielzahl von ersten Schallaustrittslöchern (613) miteinander in Verbindung stehen, um einen dritten Teil auszubilden, und eine Lochwand des dritten Teils relativ zu einer Lochwand des zweiten Teils nahe an der Innenseite des Seitenrahmens (610) liegt; und der Lichtleiterkörper (653) in dem dritten Teil aufgenommen ist, und jeder Lichtleiter in einem zweiten Teil aufgenommen ist;
**dadurch gekennzeichnet, dass** der Lichtleiter (65) ferner ein Montageteil umfasst, wobei sich das Montageteil auf einer Umfangsfläche des Endteils von zwei gegenüberliegenden Seiten der Bodenfläche des Lichtleiterkörpers (653) weg erstreckt, eine Montagefläche, die von dem Montageteil stammt und die der Bodenfläche gegenüberliegt, eine erste Montagefläche und eine zweite Montagefläche umfasst, und die zweite Montagefläche relativ zu der ersten Montagefläche geneigt ist, um einen eingeschlossenen Winkel auszubilden, der größer als 180° ist;
der Seitenrahmen (610) an dem dritten Teil ausgespart ist, um eine erste Kontaktfläche und eine zweite Kontaktfläche auszubilden, wobei die zweite Kontaktfläche relativ zu der ersten Kontaktfläche geneigt ist, um einen eingeschlossenen Winkel auszubilden, der kleiner als 180° ist; und
die erste Montagefläche in Kontakt mit der ersten Kontaktfläche steht, und die zweite Montagefläche in Kontakt mit der zweiten Kontaktfläche steht, oder
wobei der Lichtleiter (65) ferner ein Montageteil umfasst, wobei sich das Montageteil an der zweiten Endfläche von einer Kante der Bodenfläche des Lichtleiterkörpers (653) in einer Richtung weg von der Lichtleitung erstreckt, eine Montagefläche, die von dem Montageteil stammt und die der Bodenfläche gegenüberliegt, einen eingeschlossenen Winkel ausbildet, der relativ zu dem verbundenen Lichtleiterkörper (653) kleiner als 180° ist, der Seitenrahmen (610) eine geneigte Fläche auf dem dritten Teil ausbildet, die geneigte Fläche relativ zu der Lochwand des dritten Teils geneigt ist, um einen eingeschlossenen Winkel auszubilden, der größer als 180° ist, eine Umfangsfläche des Lichtleiterkörpers (653) in Kontakt mit der Lochwand steht, und die Montagefläche in Kontakt mit der geneigten Fläche steht.

2. Endgerät nach Anspruch 1, wobei die ringförmige Stufe die Lochwand des ersten Teils mit der Lochwand des zweiten Teils unter Verwendung einer Stoßfläche verbindet, die erste Endfläche eine Stufenfläche an einer Verbindung zwischen dem Lichtleiterkörper (653) und der Lichtleitung ausbildet, und die Stufenfläche an der Stoßfläche anliegt und unter Verwendung einer Klebeschicht an der Stoßfläche befestigt ist.

3. Endgerät nach Anspruch 1, wobei
eine Bodenfläche des Montageteils und die Bodenfläche des Lichtleitkörpers (653) eine flache Ebene ausbilden, und die Ebene, die durch die Bodenfläche des Befestigungsteils und die Bodenfläche des Lichtleitkörpers (653) ausgebildet wird, die Lichtaustrittsfläche (652) ist.

4. Endgerät nach Anspruch 1, wobei der Lichtleiter (65) eine Lichtleitung und einen Boden umfasst, die Lichtleitung eine erste Endfläche und eine zweite Endfläche gegenüber der ersten Endfläche umfasst, die erste Endfläche die Lichteinfallsfläche (651) ist, die zweite Endfläche relativ zu der ersten Endfläche geneigt ist, der Boden die Form eines runden Tisches aufweist, der Boden eine erste Bodenfläche und eine zweite Bodenfläche umfasst, ein Radius der ersten Bodenfläche kleiner als ein Radius der zweiten Bodenfläche ist, die erste Bodenfläche an der zweiten Endfläche des Lichtleiters befestigt ist, und die zweite Bodenfläche die Lichtaustrittsfläche (652) ist.

5. Endgerät nach Anspruch 1, wobei das Endgerät ferner Folgendes umfasst:
ein zweites Schallaustrittsloch (614), wobei sich das zweite Schallaustrittsloch (614) an der Oberseite des Seitenrahmens (610) des Endgeräts befindet und das Innere des Endgeräts mit der Außenseite verbindet;
einen Schallhohlraum (639), wobei der Schallhohlraum (639) im Inneren des Endgeräts angeordnet ist, mit dem zweiten Schallaustrittsloch (614) in Verbindung steht und von dem ersten Schallaustrittsloch (613) isoliert ist; und
einen Empfänger (69), wobei ein Schallausgang (691) des Empfängers (69) mit dem Schallhohlraum (639) in Verbindung steht.

6. Endgerät nach Anspruch 5, wobei
das Endgerät ferner eine Mittelplatte umfasst, eine Umfangsseite der Mittelplatte an einer inneren Umfangsseite des Seitenrahmens befestigt ist und sich ein Teil, der von einer Lochwand des ersten Schallaustrittslochs (613) stammt und der nahe an einer Innenwand des Seitenrahmens (610) liegt, und ein Teil, der von einer Lochwand des zweiten Schallaustrittslochs (614) stammt und der nahe an der Innenwand des Seitenrahmens (610) liegt, auf zwei gegenüberliegenden Seiten der Mittelplatte befinden.

7. Endgerät nach Anspruch 1, wobei das Endgerät ferner Folgendes umfasst:
ein zweites Schallaustrittsloch (614), wobei sich das zweite Schallaustrittsloch (614) an der Oberseite des Seitenrahmens (610) des Endgeräts befindet und das Innere des Endgeräts mit der Außenseite verbindet;
einen Schallhohlraum (639), wobei der Schallhohlraum (639) im Inneren des Endgeräts angeordnet ist, mit dem zweiten Schallaustrittsloch (614) in Verbindung steht und mit dem ersten Schallaustrittsloch (613) in Verbindung steht;
einen Empfänger (69), wobei ein Schallausgang (691) des Empfängers (69) mit dem Schallhohlraum (639) in Verbindung steht; und
wobei ein lichtempfindlicher Einlass des Umgebungslichtsensors (67) mit dem Schallhohlraum (639) in Verbindung steht.

## Revendications

1. Terminal, dans lequel le terminal comprend :
une pluralité de premiers orifices de sortie sonore (613), dans lequel la pluralité de premiers orifices de sortie sonore (613) est située en haut d'un cadre latéral (610) du terminal, et met en communication l'intérieur du terminal avec l'extérieur ;
un guide de lumière (65), dans lequel le guide de lumière (65) est disposé dans la pluralité de premiers orifices de sortie sonore (613), le guide de lumière (65) comprend une surface d'incidence de la lumière (651) et une surface d'émergence de la lumière (652),
et le guide de lumière (65) est configuré pour émettre directement la lumière ambiante extérieure de la surface d'incidence de la lumière (651) vers la surface d'émergence de la lumière (652) ; et
un capteur de lumière ambiante (67), dans lequel le capteur de lumière ambiante (67) est situé sur un côté intérieur du cadre latéral (610) et est opposé à la surface d'émergence de la lumière (652) ;
dans lequel le guide de lumière (65) comprend un corps de guide de lumière (653) et une pluralité de conduits de lumière, le corps de guide de lumière (653) comprend une première face d'extrémité et
une seconde face d'extrémité opposée à la première face d'extrémité, chaque conduit de lumière s'étend de la première face d'extrémité du corps de guide de lumière (653) dans une direction s'éloignant du corps de guide de lumière (653), les faces d'extrémité qui sont celles des conduits de lumière et qui sont éloignées de la première face d'extrémité forment la surface d'incidence de la lumière (651), et une partie d'extrémité dans laquelle est située la seconde face d'extrémité du corps de guide de lumière (653) comprend une surface inférieure, et la surface d'émergence de la lumière (652) comprend la surface inférieure du corps de guide de lumière (653) ;
dans lequel le cadre latéral (610) forme un épaulement annulaire dans la pluralité de premiers orifices de sortie sonore (613), l'épaulement annulaire divise la pluralité de premiers orifices de sortie sonore (613) en une première partie et une deuxième partie,
l'ouverture de la première partie est plus grande que l'ouverture de la deuxième partie, les premières parties de la pluralité de premiers orifices de sortie sonore (613) communiquent entre elles pour former une troisième partie, et la paroi de l'orifice de la troisième partie est proche du côté intérieur du cadre latéral (610) par rapport à la paroi de l'orifice de la deuxième partie ;
et le corps de guide de lumière (653) est logé dans la troisième partie, et chaque conduit de lumière est logé dans une deuxième partie ;
**caractérisé en ce que** le guide de lumière (65) comprend en outre une partie de montage, la partie de montage s'étend sur une surface circonférentielle de la partie d'extrémité en s'éloignant de deux côtés opposés de la surface inférieure du corps du guide de lumière (653), une surface de montage qui est celle de la partie de montage et qui est opposée à la surface inférieure comprend une première surface de montage et une seconde surface de montage, et la seconde surface de montage est inclinée par rapport à la première surface de montage de manière à former un angle inclus supérieur à 180° ;
le cadre latéral (610) est en retrait au niveau de la troisième partie pour former une première surface de contact et une seconde surface de contact, dans lequel la seconde surface de contact est inclinée par rapport à la première surface de contact de manière à former un angle inclus inférieur à 180° ; et
la première surface de montage est en contact avec la première surface de contact, et la seconde surface de montage est en contact avec la seconde surface de contact, ou
dans lequel le guide de lumière (65) comprend en outre une partie de montage, dans lequel la partie de montage s'étend sur la seconde face d'extrémité à partir d'un bord de la surface inférieure du corps du guide de lumière (653) dans une direction s'éloignant du conduit de lumière, une surface de montage qui est celle de la partie de montage et qui est opposée à la surface inférieure forme un angle inclus inférieur à 180° par rapport au corps du guide de lumière connecté (653), le cadre latéral (610) forme une surface inclinée sur la troisième partie, la surface inclinée est inclinée par rapport à la paroi de l'orifice de la troisième partie de manière à former un angle inclus supérieur à 180°, une surface circonférentielle du corps du guide de lumière (653) est en contact avec la paroi de l'orifice, et la surface de montage est en contact avec la surface inclinée.

2. Terminal selon la revendication 1, dans lequel l'épaulement annulaire relie la paroi de l'orifice de la première partie à la paroi de l'orifice de la deuxième partie à l'aide d'une surface d'appui, la première face d'extrémité forme une surface d'épaulement à un joint entre le corps du guide de lumière (653) et le conduit de lumière, et la surface d'épaulement s'appuie contre la surface d'appui et est fixée à la surface d'appui à l'aide d'une couche adhésive.

3. Terminal selon la revendication 1, dans lequel une surface inférieure de la partie de montage et la surface inférieure du corps du guide de lumière (653) forment un plan plat, et le plan formé par la surface inférieure de la partie de montage et la surface inférieure du corps du guide de lumière (653) est la surface d'émergence de la lumière (652).

4. Terminal selon la revendication 1, dans lequel le guide de lumière (65) comprend un conduit de lumière et un fond, le conduit de lumière comprend une première face d'extrémité et une seconde face d'extrémité opposée à la première face d'extrémité, la première face d'extrémité est la surface d'incidence de la lumière (651), la seconde face d'extrémité est inclinée par rapport à la première face d'extrémité, le fond a la forme d'une table ronde, le fond comprend une première surface inférieure et une seconde surface inférieure, le rayon de la première surface inférieure est inférieur au rayon de la seconde surface inférieure, la première surface inférieure est fixée à la seconde face d'extrémité du conduit de lumière, et la seconde surface inférieure est la surface d'émergence de la lumière (652).

5. Terminal selon la revendication 1, dans lequel le terminal comprend en outre :
un second orifice de sortie sonore (614), dans lequel le second orifice de sortie sonore (614) est situé en haut du cadre latéral (610) du terminal et met en communication l'intérieur du terminal avec l'extérieur ;
une cavité sonore (639), dans lequel la cavité sonore (639) est disposée à l'intérieur du terminal, communique avec le second orifice de sortie sonore (614) et est isolée du premier orifice de sortie sonore (613) ; et
un récepteur (69), dans lequel une sortie sonore (691) du récepteur (69) communique avec la cavité sonore (639).

6. Terminal selon la revendication 5, dans lequel le terminal comprend en outre une plaque centrale, un côté périphérique de la plaque centrale est fixé à un côté périphérique intérieur du cadre latéral, et une partie qui est une paroi du premier orifice de sortie sonore (613) et qui est proche d'une paroi intérieure du cadre latéral (610) et une partie qui est une paroi du second orifice de sortie sonore (614) et qui est proche de la paroi intérieure du cadre latéral (610) sont situées sur deux côtés opposés de la plaque centrale.

7. Terminal selon la revendication 1, dans lequel le terminal comprend en outre :
un second orifice de sortie sonore (614), dans lequel le second orifice de sortie sonore (614) est situé en haut du cadre latéral (610) du terminal et met en communication l'intérieur du terminal avec l'extérieur ;
une cavité sonore (639), dans lequel la cavité sonore (639) est disposée à l'intérieur du terminal, communique avec le second orifice de sortie sonore (614) et communique avec le premier orifice de sortie sonore (613) ;
un récepteur (69), dans lequel une sortie sonore (691) du récepteur (69) communique avec la cavité sonore (639) ; et
dans lequel une entrée photosensible du capteur de lumière ambiante (67) communique avec la cavité sonore (639).
